# EUROPEAN PATENT APPLICATION

(11) **EP 4 412 349 A1**
(43) Date of publication of application: **07.08.2024**
(21) Application number: 21959451.2
(22) Date of filing: 30.09.2021
(51) Int. Cl.: H04W 72/04, H04W 72/12

(54) **TERMINAL, BASE STATION, AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/036318
(87) International publication number: WO 2023/053417

(57) **Abstract**

A terminal includes: a reception unit configured to receive an indication of a start of a semi-persistent scheduling from the base station in a communication that uses a frequency band that is equal to or greater than a reference value; and a control unit configured to assume that scheduled downlink data is to be transmitted from the base station in response to the indication of the start of the semi-persistent scheduling. The control unit assumes that a scheduling method is to be defined for a subcarrier spacing that is equal to or greater than a predetermined value that is defined in a communication with the base station for the frequency band that is equal to or greater than the reference value.

## Description

### FIELD OF THE INVENTION

The present invention relates to a terminal, a base station and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

NR release 17 discusses using a higher frequency band than a conventional release (e.g., Non-Patent Document 2). For example, applicable numerologies including subcarrier spacings, channel bandwidths, etc., physical layer design, and possible failures in actual wireless communication in the 52.6 GHz to 71 GHz frequency band have been discussed.

In addition, in NR, discussions about the semi-persistent scheduling (SPS) for reducing the downlink overhead are continued from LTE.

### Citation List

### Non-Patent Document

Non-Patent Document 1: 3GPP TS 38.300 V16.6.0 (2021-06)
Non-Patent Document 2: 3GPP TS 38.306 V16.5.0 (2021-06)

### SUMMARY OF THE INVENTION

### TECHNICAL PROBLEM

In the semi-persistent scheduling configuration that is being discussed in NR, the large subcarrier spacing supported in the high frequency band from 52.6 GHz to 71 GHz is not taken into account, and thus, there is a case in which the SPS in the high frequency band is difficult to use.

The present invention has been made in view of the above points, and it is an object of the present invention to perform semi-persistent scheduling in the high frequency band.

### SOLUTION TO PROBLEM

According to the disclosed technique, a terminal is provided. The terminal includes: a reception unit configured to receive an indication of a start of a semi-persistent scheduling from the base station in a communication that uses a frequency band that is equal to or greater than a reference value; and a control unit unit configured to assume that scheduled downlink data is to be transmitted from the base station in response to the indication of the start of the semi-persistent scheduling. The control unit assumes that a scheduling method is to be defined for a subcarrier spacing that is equal to or greater than a predetermined value that is defined in a communication with the base station for the frequency band that is equal to or greater than the reference value.

### ADVANTAGEOUS EFFECTS OF INVENTION

According to the disclosed technique, a technology is provided that enables to perform a semi-persistent scheduling in the high frequency band.

### BRIEF DESCRIPTION OF THE DRAWINGS

[Fig. 1] is a drawing illustrating a wireless communication system related to an embodiment of the present invention.
[Fig. 2] is a drawing illustrating an example of a frequency range according to an embodiment of the present invention.
[Fig. 3] is a sequence diagram illustrating an example of a Dynamic grant processing flow.
[Fig. 4] is a sequence diagram illustrating an example of a CG processing flow.
[Fig. 5] is a sequence diagram illustrating an example of a Dynamic scheduling processing flow.
[Fig. 6] is a sequence diagram illustrating an example of an SPS processing flow.
[Fig. 7] is a drawing illustrating an example of a conventional SPS configuration.
[Fig. 8] is a drawing illustrating an example of a conventional SPS resource configuration.
[Fig. 9] is a drawing illustrating an example of a conventional terminal capability.
[Fig. 10] is a drawing illustrating an example of a technical specification of an example 1-1 of SPS related to an embodiment 1.
[Fig. 11] is a drawing illustrating an example of a configuration of an example 1-2 of SPS related to an embodiment 1.
[Fig. 12] is a drawing illustrating an example of a technical specification of an example 1-2 of SPS related to an embodiment 1.
[Fig. 13] is a drawing illustrating an example of a configuration of an example 1-3 of SPS related to an embodiment 1.
[Fig. 14] is a drawing illustrating an example of a technical specification of an example 2 of SPS related to an embodiment 1.
[Fig. 15] is a drawing illustrating an example of a configuration of SPS related to an embodiment 2.
[Fig. 16] is a drawing illustrating an example of a terminal capability related to an embodiment 3.
[Fig. 17] is a drawing illustrating an example of a functional configuration of a base station in an embodiment of the present invention.
[Fig. 18] is a drawing illustrating an example of a functional configuration of a terminal in an embodiment of the present invention.
[Fig. 19] is a drawing illustrating an example of a hardware structure of the base station or the terminal in an embodiment of the present invention.
[Fig. 20] is a drawing illustrating an example of a structure of a vehicle in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

### (System configuration)

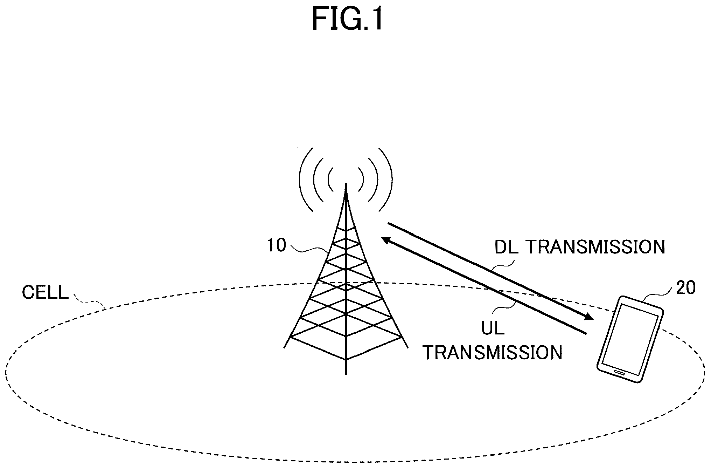

Fig. 1 is a drawing illustrating a wireless communication system related to an embodiment of the present invention.
As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

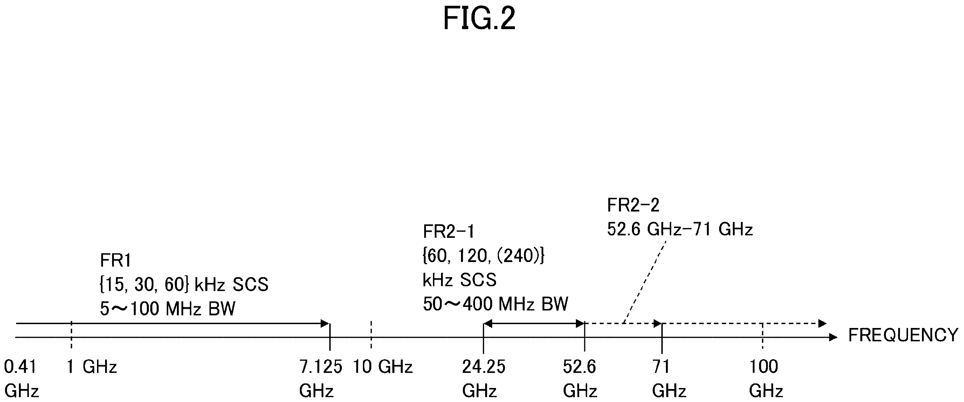

Fig. 2 is a drawing illustrating an example of a frequency range according to an embodiment of the present invention. In the NR specifications of 3GPP Release 15 and Release 16, for example, an operation in a frequency band of 52. 6 GHz or more has been discussed. Note that, as shown in Fig. 2, FR (Frequency range) 1 in which current operation is defined is a frequency band from 410 MHz to 7. 125 GHz, SCS (Sub carrier spacing) is 15, 30, or 60 kHz, and bandwidth is from 5 MHz to 100 MHz. FR2-1 is a frequency band from 24.25 GHz to 52.6 GHz, SCS is 60kHz, 120 kHz or 240 kHz, and the bandwidth is from 50 MHz to 400 MHz. In addition, a newly deployed frequency band FR2-2 is a frequency band from 52.6 GHz to 71 GHz.

Up to 64 SSB beams may be supported in the licensed bands and unlicensed bands in the newly deployed frequency band FR2-2. Also, 120 kHz SCS to be applied to SSB and 120 kHz SCS to be applied to initial access signals and channels, may be supported in the initial BWP (Bandwidth Part).

In addition to the 120 kHz SCS, SSB with 480 kHz SCS may be supported. Initial access supporting CORESET (Control Resource Set)#0/Type0-PDCCH included in the MIB, may be performed by the SSB. However, there may be the following limitations. For example, entry numbers of the synchronization raster may be limited. In addition, only CORESET#0/Type0-PDCCH with 480 kHz SCS may be supported in a case of SSB with 480 kHz SCS. Furthermore, SSB-CORESET multiplexing pattern 1 (SS/PBCH block and CORESET multiplexing pattern 1) may be prioritized.

Uniquely identifying the ANR (Automatic Neighbour Relation) and PCI (Physical Cell Identity) for detecting SSB with 120 kHz SCS, 480 kHz SCS, and 960 kHz SCS may be supported. In addition, CORESET#0/Type0-PDCCH included in MIB of SSB with 120 kHz SCS, 480 kHz SCS, and 960 kHz SCS, may be supported. In addition, one SCS for CORESET#0/Type0-PDCCH may be supported per SCS for SSB. For example, with respect to {SCS of SSB, SCS of CORESET#0/Type0-PDCCH}, {120,120}, {480,480}, and {960,960} may be supported. Furthermore, the SSB-CORESET multiplexing pattern 1 may be prioritized.

Conventionally, as an uplink scheduling, Dynamic grant and CG (Configured grant) are defined. Dynamic grant is a procedure in which scheduling is performed in response to a scheduling request from a terminal. CG is a procedure in which scheduling is performed by omitting the scheduling request from a terminal in order to reduce uplink delay.

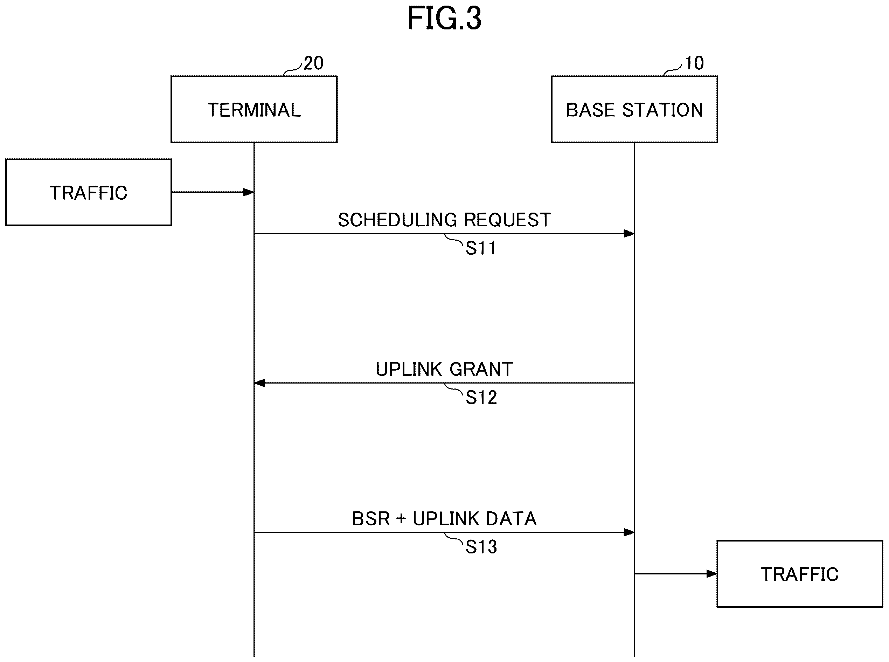

Fig. 3 is a sequence diagram illustrating an example of a Dynamic grant processing flow. When Dynamic grant is configured by RRC, the terminal 20 transmits a scheduling request to a base station 10 in response to an occurrence of uplink data (step S11). The base station 10 transmits a signal indicating the uplink grant to the terminal 20 according to the received scheduling request (step S12).

The terminal 20 transmits a BSR (Buffer Status Report) and uplink data to the base station 10 in response to the uplink grant (step S13).

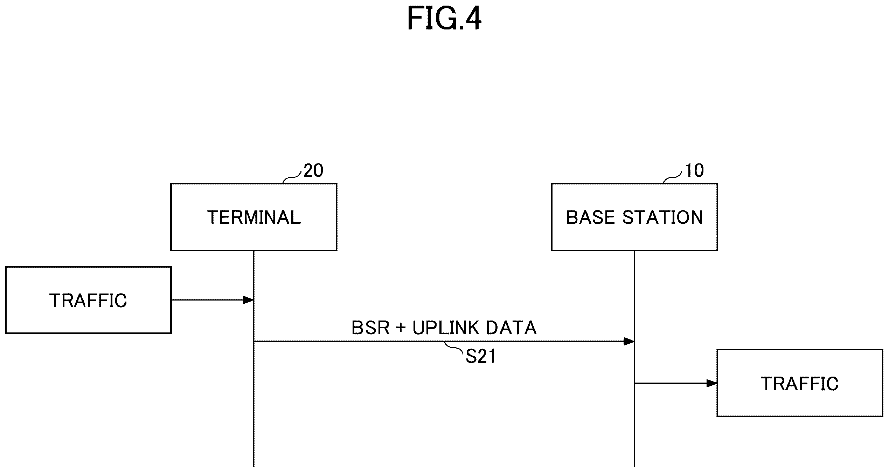

Fig. 4 is a sequence diagram illustrating an example of a CG processing flow. When CG is configured by RRC, PUSCH resources are individually allocated to the terminal 20 in advance. The terminal 20 transmits a BSR and uplink data to the base station 10 in response to an occurrence of the uplink data without performing the scheduling request (step S21).

In addition, conventionally, as a downlink scheduling, Dynamic scheduling and SPS are defined. Dynamic scheduling is a procedure in which the scheduling is performed each time when there is downlink data to be transmitted from the base station 10. SPS is a procedure in which once the scheduling is performed by the base station 10, the scheduling is semi-persistently continued in order to reduce the downlink overhead until it is stopped.

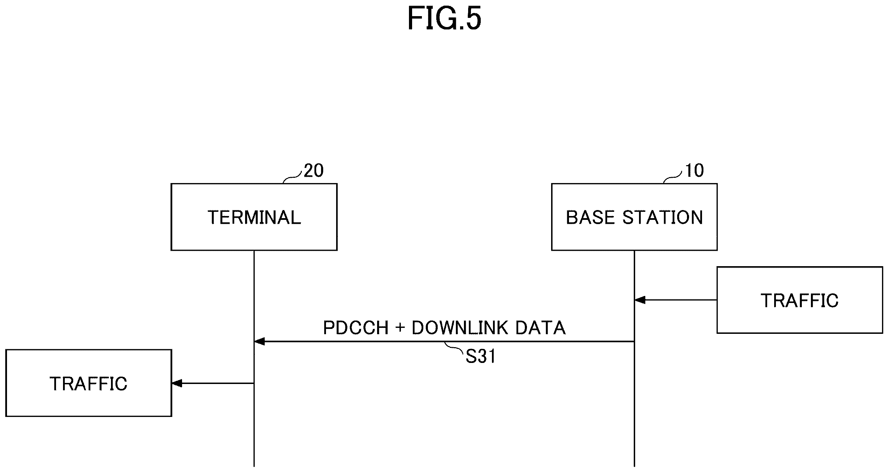

Fig. 5 is a sequence diagram illustrating an example of a Dynamic scheduling processing flow. In Dynamic scheduling, in response to an occurrence of downlink data, the base station 10 transmits a PDCCH and the downlink data, the PDCCH including the scheduling data (step S31).

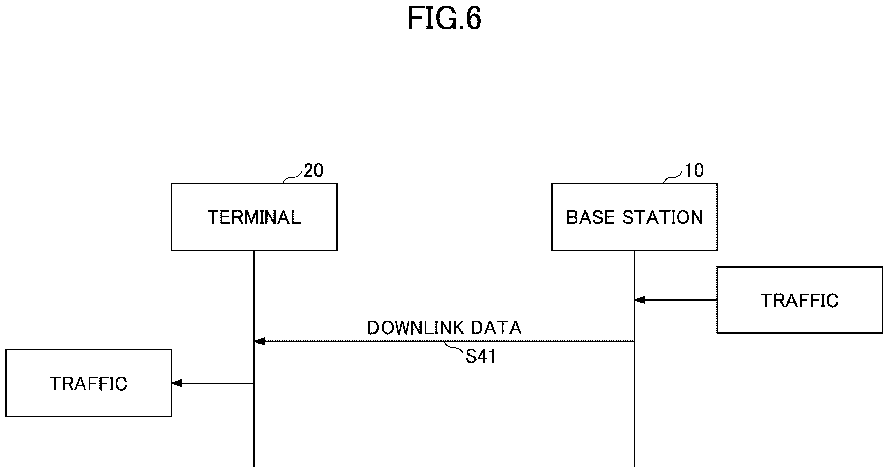

Fig. 6 is a sequence diagram illustrating an example of an SPS processing flow. When SPS is configured by RRC or the like, the base station 10 indicates, to the terminal 20, the start and the end of SPS via DCI. Once the base station indicates the start of SPS to the terminal 20, in response to an occurrence of downlink data, the base station transmits the downlink data to the terminal 20 without transmitting a PDCCH until the base station indicates the end of the SPS to the terminal 20 (step S41). When the start of semi-persistent scheduling is indicated, the terminal 20 assumes that downlink data that is scheduled based on the pre-configured period is to be transmitted from the base station.

As described above, in a case where CG alone is used to reduce the uplink latency, the procedure is performed by the RRC configuration alone, and the physical layer signaling, that is, the DCI signaling, is not required. In addition, in a case where CG and SPS are used for the sake of reducing the uplink latency and reducing the downlink overhead, the RRC configuration and the indication of the start or the end of SPS via DCI signaling are required.

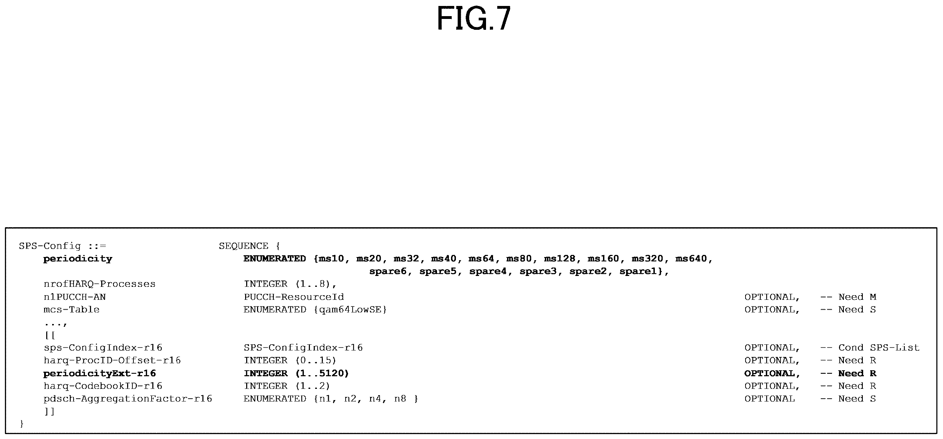

Fig. 7 is a drawing illustrating an example of a conventional SPS configuration. In the conventional RRC, two items of parameters for defining the period of SPS are defined as described below.
- periodicity
- periodicityExt-r16

The periodicity item is an item indicating the period [ms] of the release 15 downlink SPS. The periodicityExt-r16 item is an item indicating the period [ms] of the downlink SPS in the release 16 URLLC (ultra-reliable and low latency communications) communication.

In the technical specifications, it is defined that the periodicityExt item is used for calculating the period of the downlink SPS, and that, in a case where the item is present, the period configured in the periodicity item is to be ignored. In other words, in a case where the item is not present, the period configured in the periodicity item is used as is.

In addition, in a case where the periodicityExt item is present, it is defined that the following periods are to be supported in accordance with the configured subcarrier spacing [ms].

In a case where the subcarrier spacing is 15 kHz, the period is determined to be periodicityExt. In this case, the value of periodicityExt is in a range greater than or equal to 1 and less than or equal to 640.

In a case where the subcarrier spacing is 30 kHz, the period is determined to be 0.5*periodicityExt. In this case, the value of periodicityExt is in a range greater than or equal to 1 and less than or equal to 1280.

In a case where the subcarrier spacing is 60 kHz (normal CP or ECP), the period is determined to be 0.25*periodicityExt. In this case, the value of periodicityExt is in a range greater than or equal to 1 and less than or equal to 2560.

In a case where the subcarrier spacing is 120 kHz (normal CP or ECP), the period is determined to be 0.125*periodicityExt. In this case, the value of periodicityExt is in a range greater than or equal to 1 and less than or equal to 5120.

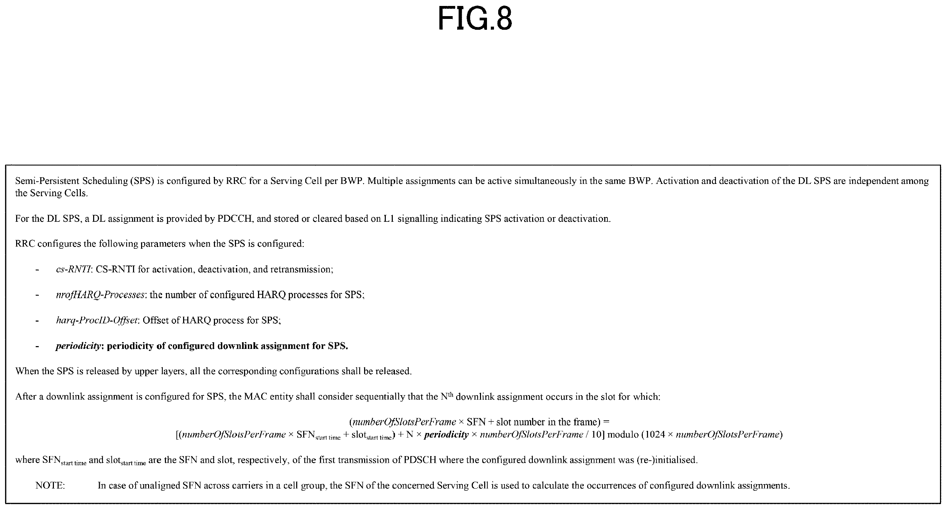

Fig. 8 is a drawing illustrating an example of a conventional SPS resource configuration. In MAC, a method is defined for calculating which downlink slot is to be used for allocating the SPS resource depending on the above-described value of periodicity or periodicityExt.

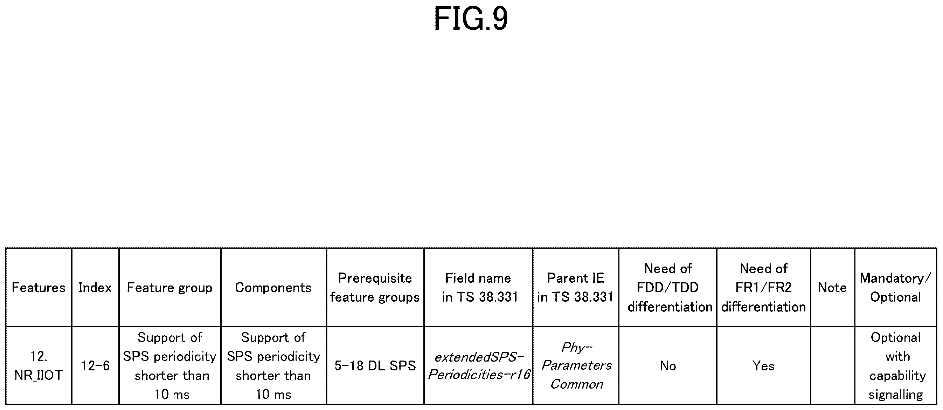

Fig. 9 is a drawing illustrating an example of a conventional terminal capability. In the current terminal capability, only whether or not differentiation between FR1 and FR2 is required is defined, and thus, whether or not "applicable to FR2" includes "applicable to FR2-2 (52.6-71 GHz)" is unclear.

### (Overview of embodiment)

In an embodiment of the present invention, the scheduling method of the semi-persistent scheduling is extended in order to support the larger subcarrier spacing (for example, the subcarrier spacing larger than 120 kHz) that is supported in the high frequency band from 52.6 GHz to 71 GHz. Hereinafter, an embodiment 1, embodiment 2, and embodiment 3 will be described in which specific methods are described. It is to be noted that 52.6 GHz is an example of a reference value indicating the high frequency band of FR2-2. In addition, an embodiment of the present invention may be applied to the high frequency band that is equal to or greater than 71 GHz.

### (Embodiment 1)

In this embodiment, an example will be described in which the definition of the conventional RRC configuration item periodicityExt-r16 is modified or a new configuration item is added.

Specifically, the definition with respect to the value of the periodicityExt-r16 item in a case where the subcarrier spacing is greater than 120 kHz may be added in the SPS technical specification.

In the SPS technical specification, at least one of the following items will be included.
- Specific subcarrier spacing
- Coefficient to be multiplied with periodicityExt-r16 in order to calculate the period.
- Range of periodicityExt-r16

### (Example 1-1)

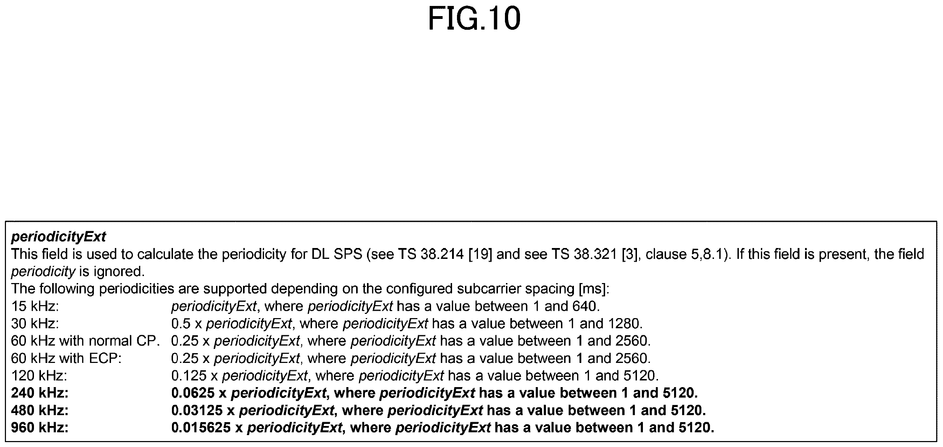

Fig. 10 is a drawing illustrating an example of a technical specification of an example 1-1 of SPS related to an embodiment 1. Items for subcarrier spacings 240 kHz, 480 kHz, and 960 kHz may be added to the SPS technical specification. In the added technical specification, the ratio between the subcarrier spacing and the above-described coefficient is the same. For example, the following technical specifications are added.

In a case where the subcarrier spacing is 240 kHz, the period is determined to be 0.0625*periodicityExt. In this case, the value of periodicityExt is in a range greater than or equal to 1 and less than or equal to 5120.

In a case where the subcarrier spacing is 480 kHz, the period is determined to be 0.03125*periodicityExt. In this case, the value of periodicityExt is in a range greater than or equal to 1 and less than or equal to 5120.

In a case where the subcarrier spacing is 960 kHz, the period is determined to be 0.015625*periodicityExt. In this case, the value of periodicityExt is in a range greater than or equal to 1 and less than or equal to 5120.

It is to be noted that the number of digits after the decimal point of the coefficient and the numerical values may be different values, and for example, the coefficient may be rounded to a predetermined number of digits.

### (Example 1-2)

In an example 1-2, the maximum value in the range of the value of periodicityExt-r16 is extended.

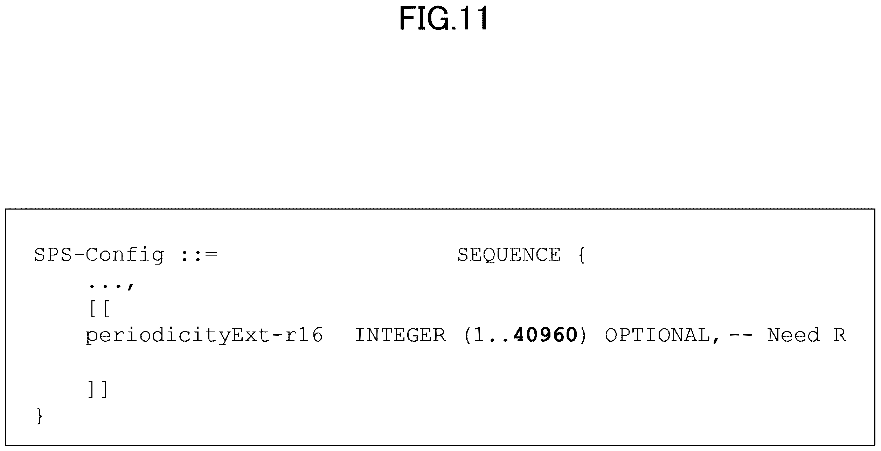

Fig. 11 is a drawing illustrating an example of a configuration of an example 1-2 of SPS related to an embodiment 1. For example, periodicityExt-r16, which is conventionally used to be an integer value from 1 to 5120, is changed to an integer value from 1 to 40960.

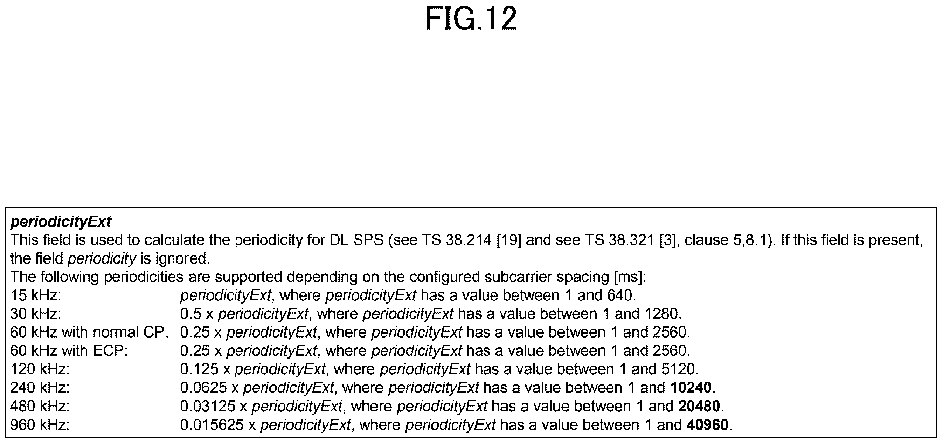

Fig. 12 is a drawing illustrating an example of a technical specification of an example 1-2 of SPS related to an embodiment 1. In the example 1-2, the range of periodicityExt corresponding to each subcarrier spacing is also extended. For example, the following technical specifications are added.

In a case where the subcarrier spacing is 240 kHz, the period is determined to be 0.0625*periodicityExt. In this case, the value of periodicityExt is in a range greater than or equal to 1 and less than or equal to 10240.

In a case where the subcarrier spacing is 480 kHz, the period is determined to be 0.03125*periodicityExt. In this case, the value of periodicityExt is in a range greater than or equal to 1 and less than or equal to 20480.

In a case where the subcarrier spacing is 960 kHz, the period is determined to be 0.015625*periodicityExt. In this case, the value of periodicityExt is in a range greater than or equal to 1 and less than or equal to 40960.

### (Example 1-3)

Anew RRC parameter for release 17 (for example, periodicityExt-r17) may be defined separately from periodicityExt-r16.

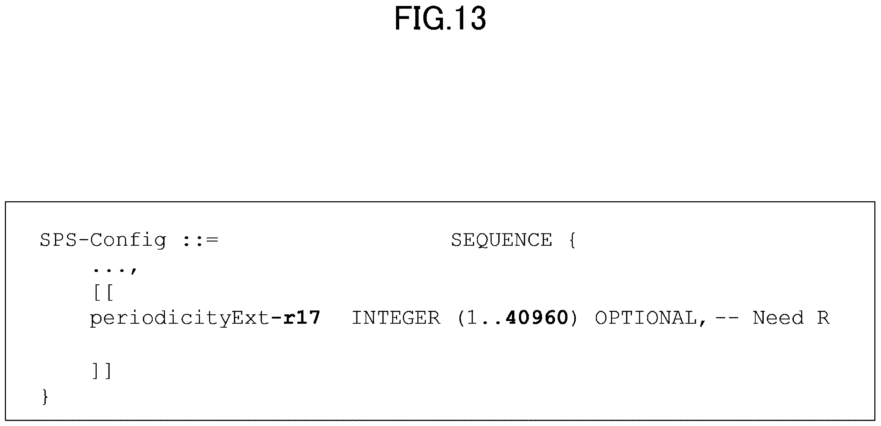

Fig. 13 is a drawing illustrating an example of a configuration of an example 1-3 of SPS related to an embodiment 1. The range of the possible value of the new RRC parameter periodicityExt-r17 is an integer value from 1 to 40960.

In a case where the periodicityExt-r17 item is present, the value of the item is used as periodicityExt. In a case where the periodicityExt-r17 item is absent and the periodicityExt-r16 item is present, that item is used as periodicityExt, and in a case where the periodicityExt-r16 item is absent, the period that is configured to the periodicity item is used as is.

The technical specification for calculating the SPS period from the value configured as periodicityExt is the same as that of the example 1-2.

### <Example 2>

A method of calculating the SPS period regardless of the subcarrier spacing may be defined as the technical specification for calculating the SPS period, For example, the method of calculating the SPS period regardless of the subcarrier spacing may be defined only in a case where the subcarrier spacing is greater than 120 kHz. Alternatively, the method of calculating the SPS period regardless of the subcarrier spacing may be defined in a case where the subcarrier spacing other than the conventional definition is greater than 120 kHz or is equal to or less than 120 kHz.

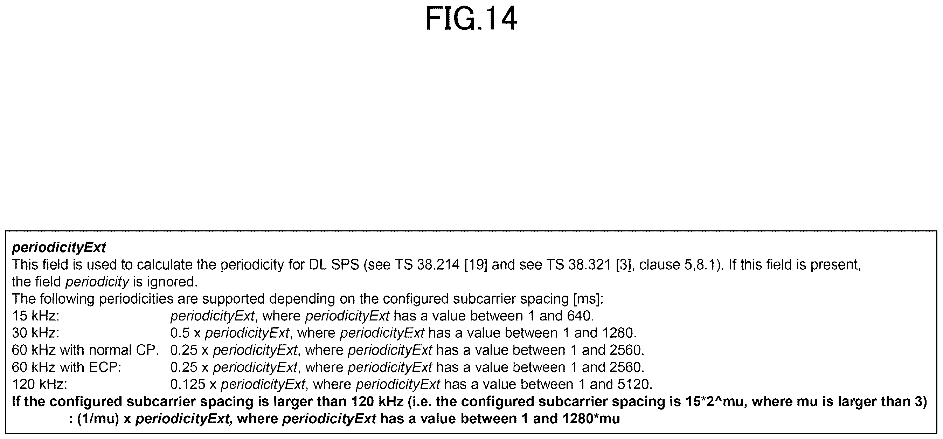

Fig. 14 is a drawing illustrating an example of a technical specification of an example 2 of SPS related to an embodiment 1. Fig. 14 illustrates contents of the technical specification for a case in which the method of calculating the SPS period regardless of the subcarrier spacing is defined only in a case where the subcarrier spacing is greater than 120 kHz.

In a case where the configured subcarrier spacing is greater than 120 kHz (that is, in a case where the configured subcarrier spacing is 15*2^{µ}, and µ is greater than 3), the SPS period is (1/p)*periodicityExt. Here, the value of periodicityExt is included in a range from 1 to 1280*µ.

According to this embodiment, the downlink SPS period can be configured with the finer granularity.

### (Embodiment 2)

In this embodiment, an example will be described in which the MAC procedure for determining the SPS period is updated.

Specifically, the MAC procedure will be defined for a case in which the subcarrier spacing is greater than 120 kHz. The MAC procedure for a case in which the subcarrier spacing is greater than 120 kHz is a procedure that is different from the MAC procedure for a case in which the subcarrier spacing is equal to or less than 120 kHz.

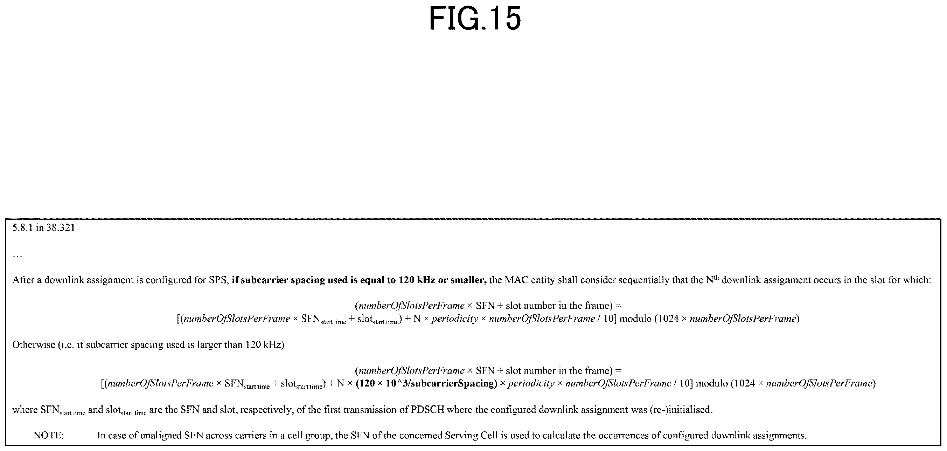

Fig. 15 is a drawing illustrating an example of a configuration of SPS resources related to an embodiment 2. The method of determining a slot to which the SPS resource is to be applied is defined separately for a case in which the subcarrier spacing is equal to or less than 120 kHz and for a case in which the subcarrier spacing is greater than 120 kHz. In addition, in a case where the subcarrier spacing is greater than 120 kHz, a coefficient other than 1 is multiplied with the value of periodicity.

Specifically, the coefficient to be multiplied with the value of periodicity may be 120*10³/(subcarrier spacing [kHz]). It is to be noted that, in this case, the RRC configuration value in a case where the subcarrier spacing is 120 kHz may be assumed to be reused.

According to this embodiment, the downlink SPS period can be configured with a finer granularity without changing the RRC parameter.

### (Embodiment 3)

In this embodiment, an example of defining UE capability regarding whether to support signaling for 52.6-71GHz and indicate the function thereof will be described.

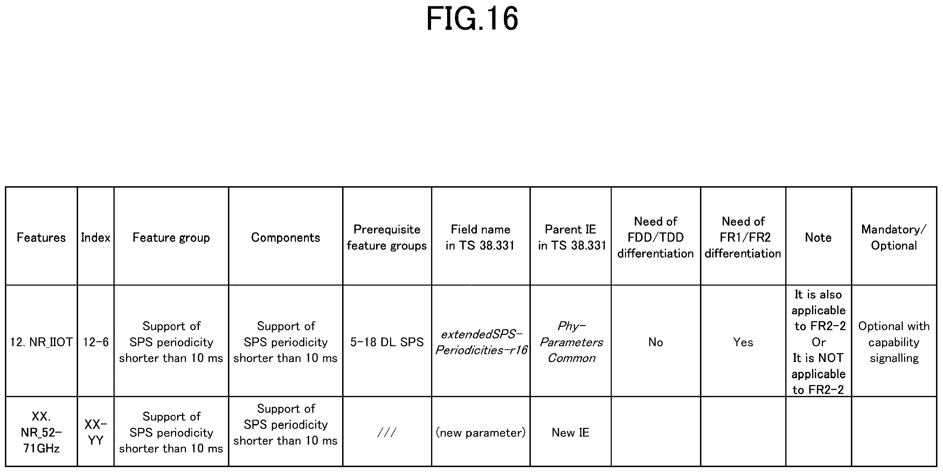

Fig. 16 is a drawing illustrating an example of a terminal capability related to an embodiment 3.

### (Embodiment 3-1)

Information indicating that FG12-6 is to be applied to FR2-2 (52.6-71 GHz) and FR2-1 when FG12-6 is applied to FR2 may be added as a note regarding the terminal capability.

### (Embodiment 3-2)

Information indicating that FG12-6 is to be applied to FR2-1 alone and is to be not applied to FR2-2 (52.6-71 GHz) when FG12-6 is applied to FR2 may be added as a note regarding the terminal capability.

### (Option 1)

Whether or not it is applicable to FR2-2 may be defined.

### (Option 1-1)

A new terminal capability signaling may be defined. The new terminal capability signaling is information indicating whether or not to support FR2-2 frequency bands.

### (Option 1-2)

A new terminal capability signaling may be defined. As illustrated in the second entry in Fig. 16, the new terminal capability signaling is information indicating whether or not to support an operation with at least one of subcarrier spacings of 480 kHz and 960 kHz.

### (Embodiment 3-3)

The terminal is not required to support the downlink SPS period that is shorter than 10 ms.

### (Option 1)

A condition for applying the embodiment 3-3 may be defined.

### (Option 1-1)

The embodiment 3-3 may be applied in a case where the subcarrier spacing of 480 kHz or 960 kHz is configured.

### (Option 1-2)

The embodiment 3-3 may be applied in a case of operating in a frequency range of 52.6-71 GHz (that is, FR2-2).

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only proposed functions in one of the embodiments.

### <Base station 10>

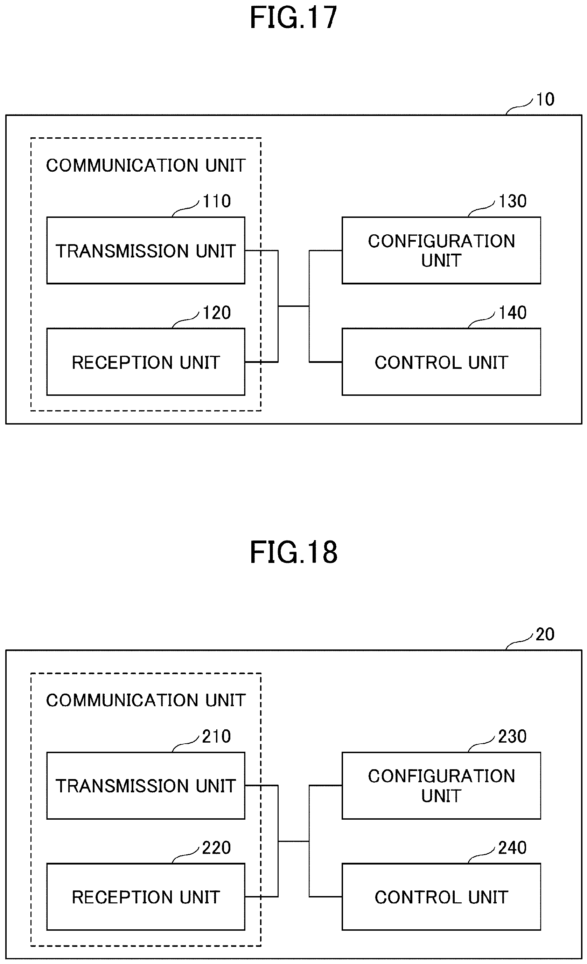

Fig. 17 is a diagram illustrating an example of a functional configuration of the base station 10. As shown in Fig. 17, the base station 10 includes a transmission unit 110, a reception unit 120, a configuration unit 130, and a control unit 140. The functional configuration illustrated in Fig. 17 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 controls the entire base station 10 including, for example, control of signal transmission and reception. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 18 is a diagram illustrating an example of a functional configuration of the terminal 20. As shown in FIG. 18, the terminal 20 includes a transmission unit 210, a reception unit 220, a configuration unit 230, and a control unit 240. The functional configuration illustrated in Fig. 18 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

The terminal or base station according to an embodiment of the present invention may be configured as a terminal or a base station described in the following paragraphs. In addition, a communication method below may be performed.

### <Configuration related to an embodiment of the present invention>

### (First item)

A terminal including: a reception unit configured to receive an indication of a start of a semi-persistent scheduling from the base station in a communication that uses a frequency band that is equal to or greater than a reference value; and
a control unit configured to assume that scheduled downlink data is to be transmitted from the base station in response to the indication of the start of the semi-persistent scheduling, wherein
the control unit assumes that a scheduling method is to be defined for a subcarrier spacing that is equal to or greater than a predetermined value that is defined in a communication with the base station for the frequency band that is equal to or greater than the reference value.

### (Second item)

The terminal is described in the first item. In response to the indication of the start of the semi-persistent scheduling, the control unit assumes that the scheduled downlink data is to be transmitted from the base station, based on a periodicity that is defined for the subcarrier spacing that is equal to or greater than the predetermined value.

### (Third item)

The terminal is described in the first item. In response to the indication of the start of the semi-persistent scheduling, the control unit assumes that the scheduled downlink data is to be transmitted from the base station, based on a procedure that is defined for the subcarrier spacing that is equal to or greater than the predetermined value.

### (Fourth item)

A base station including: a transmitting unit configured to transmit an indication of a start of a semi-persistent scheduling to the base station in a communication that uses a frequency band that is equal to or greater than a reference value; and
a control unit configured to perform control of transmitting scheduled downlink data to the terminal in response to indicating the start of the semi-persistent scheduling to the terminal, wherein
the control unit performs control of transmitting the scheduled downlink data to the terminal in a communication with the terminal, based on a scheduling method for a subcarrier spacing that is equal to or greater than a predetermined value that is defined for the frequency band that is equal to or greater than the reference value.

### (Fifth item)

A communication method performed by a terminal, the communication method including:
receiving an indication of a start of a semi-persistent scheduling from the base station in a communication that uses a frequency band that is equal to or greater than a reference value;
assuming that scheduled downlink data is to be transmitted from the base station in response to the indication of the start of the semi-persistent scheduling; and
assuming that a scheduling method is to be defined for a subcarrier spacing that is equal to or greater than a predetermined value that is defined in a communication with the base station for the frequency band that is equal to or greater than the reference value.

According to any one of the above-described configurations, a technology is provided that enables to perform a semi-persistent scheduling in the high frequency band. According to the second item, the semi-persistent scheduling can be performed based on the period that is defined corresponding to the subcarrier spacing that is equal to or greater than a predetermined value. According to the third item, the semi-persistent scheduling can be performed based on a procedure that is defined corresponding to the subcarrier spacing that is equal to or greater than a predetermined value.

### (Hardware structure)

In the above block diagrams used for describing an embodiment of the present invention (Fig. 17 and Fig. 18), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

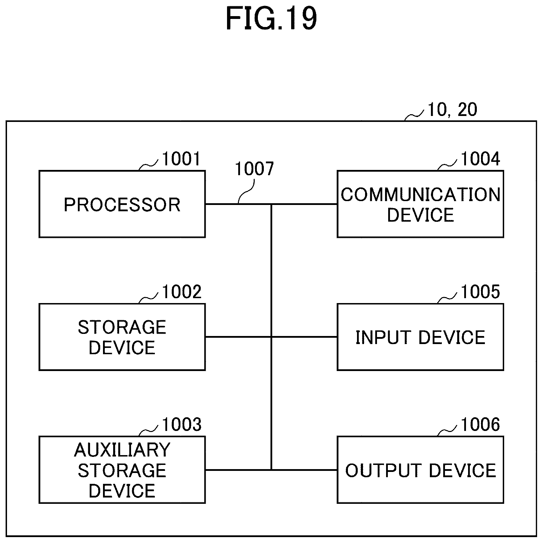

For example, the base station 10, terminal 20, etc., according to an embodiment of the present disclosure may function as a computer for processing the radio communication method of the present disclosure. Fig. 19 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may be configured without including some of the devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 17 may be realized by control programs that are stored in the storage device 1002 and are executed by the processor 1001. Further, for example, the control unit 240 of the terminal 20 illustrated in Fig. 18 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

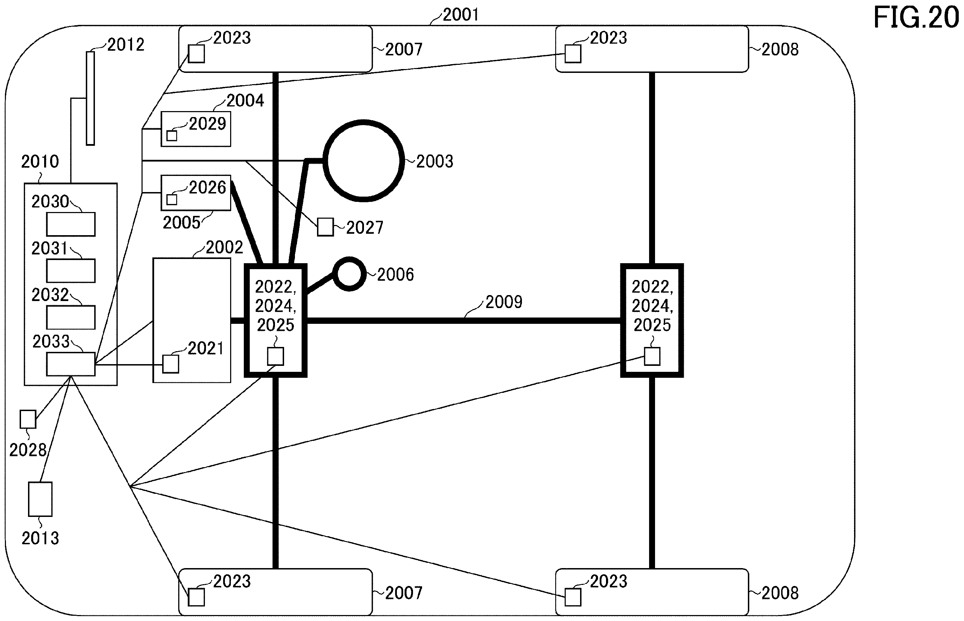

Fig. 20 shows an example of a configuration of a vehicle 2001. As shown in Fig. 20, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021-29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer, decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a subslot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
10A Satellite
10B Gateway
10C Terrestrial base station
10D CN
10E Flying object
110 Transmission unit
120 Reception unit
130 Configuration unit
140 Control unit
20 Terminal
210 Transmission unit
220 Reception unit
230 Configuration unit
240 Control unit
30 Core network
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive an indication of a start of a semi-persistent scheduling from the base station in a communication that uses a frequency band that is equal to or greater than a reference value; and
a control unit configured to assume that scheduled downlink data is to be transmitted from the base station in response to the indication of the start of the semi-persistent scheduling, wherein
the control unit assumes that a scheduling method is to be defined for a subcarrier spacing that is equal to or greater than a predetermined value that is defined in a communication with the base station for the frequency band that is equal to or greater than the reference value.

2. The terminal as claimed in claim 1, wherein
in response to the indication of the start of the semi-persistent scheduling, the control unit assumes that the scheduled downlink data is to be transmitted from the base station, based on a periodicity that is defined for the subcarrier spacing that is equal to or greater than the predetermined value.

3. The terminal as claimed in claim 1, wherein
in response to the indication of the start of the semi-persistent scheduling, the control unit assumes that the scheduled downlink data is to be transmitted from the base station, based on a procedure that is defined for the subcarrier spacing that is equal to or greater than the predetermined value.

4. A base station comprising:
a transmission unit configured to transmit an indication of a start of a semi-persistent scheduling to the base station in a communication that uses a frequency band that is equal to or greater than a reference value; and
a control unit configured to perform control of transmitting scheduled downlink data to the terminal in response to indicating the start of the semi-persistent scheduling to the terminal, wherein
the control unit performs control of transmitting the scheduled downlink data to the terminal in a communication with the terminal, based on a scheduling method for a subcarrier spacing that is equal to or greater than a predetermined value that is defined for the frequency band that is equal to or greater than the reference value.

5. A communication method performed by a terminal, the communication method comprising:
receiving an indication of a start of a semi-persistent scheduling from the base station in a communication that uses a frequency band that is equal to or greater than a reference value;
assuming that scheduled downlink data is to be transmitted from the base station in response to the indication of the start of the semi-persistent scheduling; and
assuming that a scheduling method is to be defined for a subcarrier spacing that is equal to or greater than a predetermined value that is defined in a communication with the base station for the frequency band that is equal to or greater than the reference value.
